# EUROPÄISCHE PATENTSCHRIFT

(11) **EP 1 859 227 B1**
(45) Veröffentlichungstag und Bekanntmachung des Hinweises auf die Patenterteilung: **19.08.2009**
(21) Anmeldenummer: 06742513.2
(22) Anmeldetag: 02.03.2006
(51) Int. Cl.: G01B 11/02, B65H 23/02

(54) **SENSORANORDNUNG ZUR OPTISCHEN KANTENDETEKTIERUNG EINER WARE UND VERFAHREN ZUR BREITENMESSUNG**
SENSOR ASSEMBLY FOR OPTICALLY DETECTING THE EDGES OF A PRODUCT AND WIDTH-MEASUREMENT METHOD
SYSTEME DE CAPTEURS DESTINE A LA DETECTION D'ARETE OPTIQUE D'UN PRODUIT ET PROCEDE DE DETERMINATION DE LARGEUR

(30) Priorität: 04.03.2005 DE 202005003524 U; 03.05.2005 DE 202005007089 U; 12.07.2005 DE 102005032526
(43) Veröffentlichungstag der Anmeldung: 28.11.2007
(73) Patentinhaber: Mahlo GmbH & Co. KG, 93342 Saal/Donau (DE)
(72) Erfinder: SCHMIDL, Karl-Heinz, 93309 Kehlheim (DE)
(74) Vertreter: Meissner, Bolte & Partner
(86) Internationale Anmeldenummer: PCT/EP2006/001910
(87) Internationale Veröffentlichungsnummer: WO 2006/092300

(56) Entgegenhaltungen:
- EP-A- 0 854 471
- DE-A1- 10 157 927
- DE-A1- 19 926 848
- US-A- 4 694 153
- US-A- 5 120 976
- US-A- 5 489 784

## Beschreibung

Die Erfindung betrifft eine Sensoranordnung zur optischen Kantendetektierung einer Ware, insbesondere zum Messen einer Warenbreite, durch Bestimmen einer von der Ware beeinflussten Lichtausbreitung, sowie ein Verfahren zur Breitenmessung einer Ware mittels einer derartigen Sensoranordnung.

Derartige Sensoranordnungen werden vor allem bei geförderten Waren oder Warenbahnen in übergreifenden Fertigungs- und Transporteinrichtungen verwendet, bei denen eine Warenlage genau zu detektieren bzw. gegebenenfalls zu korrigieren ist. Optische Sensoranordnungen bieten den Vorteil einer berührungslosen Detektion der Warenlage, einer schnellen Messwerterfassung und einer hohen Verschleißfestigkeit durch das Vermeiden eines mechanischen Kontaktes zwischen Sensor und Ware.

Aus dem Stand der Technik sind insbesondere Breitbandsensoren und Absolutsensoren bekannt. Ein Breitbandsensor besteht aus einer langgestreckten, geometrisch linearen Lichtquelle, einer gegenüber der Lichtquelle angeordneten parallel zur Lichtquelle angeordneten linearen Lichtsammelanordnung und einer über der linearen Lichtquelle oder der Lichtsammeleinrichtung angeordneten Lichtführungseinrichtung zur geometrischen Modulation der Strahlausbreitung zwischen Lichtquelle und Lichtsammelanordnung. Dabei wird bei einer gewissen Stellung der Lichtführungseinrichtung die Lichtausbreitung zwischen linearer Lichtquelle und Lichtsammeleinrichtung durch die lichtundurchlässige Ware abgeblendet und unterbrochen. Der in diesem Augenblick vorliegende Stand der Lichtführungseinrichtung wird in eine die Lage der Warenkante beschreibende Ortsposition umgerechnet. Als lineare Lichtquelle werden hierbei Leuchtstoffröhren und dergleichen stabförmige Lichtquellen verwendet. Die lineare Lichtsammeleinrichtung ist als ein Lichtsammelstab ausgebildet und die Lichtführungseinrichtung kann durch eine rotierende Trommel mit einer schraubenförmig um den Trommelmantel geführte Schlitzblende oder Lochkette realisiert sein. In diesem Fall wird die Winkelstellung der Trommel in dem Moment ermittelt, wenn in dem Lichtsammelstab kein Licht durch die abschattende Wirkung der Ware mehr detektiert wird. Aus der bekannten Ganghöhe der schraubenförmigen Schlitzblende und der detektierten Winkelstellung wird sodann der Ort der abschattenden Warenkante ermittelt. Eine Warenbreite lässt sich in einer dazu entsprechenden Weise durch eine doppelte Anordnung ermitteln, indem eine erste und eine zweite Warenkante in der beschriebenen Weise detektiert und die dabei ermittelten Ortspositionen durch eine Differenzbildung miteinander in Beziehung gesetzt werden.

Eine wie soeben beschriebene Vorrichtung bzw. Verfahren zur optischen Kantendetektierung einer Ware wird beispielsweise in der DE-A-101 57 927 offenbart.

Diese Sensorart weist vor allem den Nachteil auf, dass die Kantenerfassung letztlich auf einem mechanischen Wege erfolgt. Durch die Trägheit der mechanischen Teile, beispielsweise dem Trägheitsmoment der erwähnten Trommel, ist jeder Messvorgang mit einer gewissen mechanischen Anlauf- und damit Todzeit verbunden. Weiterhin sind zum Betrieb der erwähnten Einrichtung mechanische Antriebsmittel, insbesondere Stell- oder Schrittmotoren, notwendig, die einerseits mit zum Teil erheblichen Kosten verbunden sind und andererseits einem mechanischen Verschleiß unterliegen.

Die Ausführungsform des Absolutsensors vermeidet das Problem der mechanischen Abnutzung dadurch, dass die Ortsauflösung bei der Kantendetektion vollständig auf optischem Wege erfolgt. Hierzu ist der stabförmigen Lichtquelle gegenüberliegend eine Anordnung parallelverlaufender Lichtleiter vorgesehen, deren Orte eindeutig bestimmt sind. Die zu detektierende Ware wird wie bei der vorhergehend beschriebenen Ausführungsform durch einen Spalt zwischen Lichtquelle und Lichtleiteranordnung hindurchgeführt, sodass die Kantendetektion wiederum in einer Transmissionskonfiguration ausgeführt wird. Hierbei bildet die lichtundurchlässige Ware ein Hindernis für die von der stabförmigen Lichtquelle emittierte Strahlung, das sich in seinen Abmessungen auf der Lichtleiteranordnung schattenförmig abbildet. Damit werden auch nur die außerhalb des Schattens liegenden Lichtleiter bestrahlt und leiten das empfangene Licht an eine Anordnung aus Photodioden weiter, die mit den Lichtleitern optisch gekoppelt sind. Da den einzelnen Lichtleitern und damit den einzelnen Photodioden eindeutig ein Ort zugeordnet ist, ist es somit möglich, die Kantenstruktur der Ware direkt aus der Menge der angeregten Photodioden auszulesen. Dieses Verfahren ist frei von mechanischem Verschleiß und ermöglicht eine schnelle Kantendetektion, die demzufolge besonders für laufende Warenbahnen vorteilhaft ist.

Beide Anordnungen greifen jedoch auf das Prinzip der Transmissionskonfiguration zurück. Dadurch sind derartige Anordnungen zum einen relativ raumgreifend und müssen zum anderen auf die Dicke der hindurchgeführten Ware jeweils neu angepasst werden.

In der Offenlegungsschrift DE 199 26 848 A1 wird ein Lagedetektionssystem auf IR-Lichtbasis für Waren offenbart. Diese Schrift beschäftigt sich mit dem Verhältnis von Überdeckung durch das Material und der darunter befindlichen nahezu vollständig absorbierenden Oberfläche. Hierbei wird das über den dortigen Detektor empfangene Licht in einen Analogsignalpegel umgewandelt, der mittels der linearen Kennlinie in eine Wegstrecke der überdeckten Linie umgerechnet werden kann. Nach diesem beschriebenen Prinzip ist es notwendig, eine Vielzahl von Photodioden als IR-Lichtsensoren vorzusehen, um den vorerwähnten "Überdeckungsgrad" zu ermitteln.

Eine Vorrichtung zum Erfassen der Position einer Bandkante eines Magnetbandes, das an einem Magnetkopf gleitet wird in der Europäischen Patentanmeldung EP 0 854 471 A1 offenbart. Die Vorrichtung umfasst einen Lichtsender, der auf einer Seite des Magnetbandes angeordnet ist und Licht aussendet. Erfindungsgemäß ist auf einer gegenüberliegenden Seite des Magnetbandes zum Reflektieren des Lichtes über eine Kante des Bandes eine reflektierende Fläche angeordnet. Außerdem ist ein Lichtempfänger vorgesehen, der so angeordnet ist, dass er das Licht empfängt, welches von der reflektierende Fläche reflektiert worden ist, wobei der Lichtempfänger die empfangene Lichtmenge quantifiziert und ein entsprechendes Signal ausgibt.

Die US - A - 5 489 784 beschreibt einen Kantendetektor mit einem länglichen, über der zu detektierenden Kante angeordneten Sensor. Dieser Sensor weist abwechselnd Photodioden (LEDs) und Photodetektoren auf. Die Photodioden werden sequentiell angesteuert und zwar immerein Paar, das durch einen Photodetektor getrennt ist. Die Kante wird an der Stelle jenes Photodiodenpaars detektiert, bei dem der Photodetektor einen Abfall der von der Ware reflektierten Lichtintensität misst.

Die US - A - 4 694 153 beschreibt einen Kantendetektor mit einem länglichen, über der zu detektierenden Kante angeordneten Sensor. Dieser Sensor weist eine mit Linsenpaaren versehene Blendenplatte auf. Die eine Linse eines Linsenpaares ist über einen Lichtleiter mit einer Photodiode (LED) verbunden, die andere Linse des Linsenpaares über einen Lichtwellenleiter mit einem Photodetektor. Die Photodioden werden sequentiell angesteuert. Die Kante wird an der Stelle jenes Photodetektors detektiert, bei dem der Photodetektor einen Abfall der von der Ware reflektierten Lichtintensität misst.

Es ist daher Aufgabe der Erfindung, eine Sensoranordnung und ein Verfahren zur Kantendetektierung einer Ware anzugeben, bei der eine schnelle und mechanisch verschleißfreie Messung möglich ist, und die ohne Berücksichtigung der Warendicke in einfacher Weise in gegebene Fertigungs- und Fördervorrichtungen integriert werden kann.

Die Aufgabe wird mit einer Sensoranordnung zur Kantendetektierung einer Ware, insbesondere zum Messen einer Warenbreite durch Bestimmen einer von der Ware beeinflussten Lichtausbreitung mit den Merkmalen des Anspruchs 1. sowie mit einem Verfahren nach Anspruch 9 gelöst, wobei die abhängigen Ansprüche zweckmäßige bzw. vorteilhafte Ausführungsformen enthalten.

Die Sensoranordnung weist eine einseitig bezüglich zur Ware angeordnete Zeile mit in ihrer Ortslage definierten punktförmigen Lichtquellen sowie eine von der Lichtquellenzeile optisch isolierte Lichtleitereinrichtung zur optischen Einkopplung des von der Ware reflektierten Lichtes sowie mindestens einen Photodetektor, der mit dem Lichtleiter in Verbindung steht, auf.

Hier wird auf eine Sensoranordnung in einer Reflexionskonfiguration zurückgegriffen. Hierzu sind einzeln ansteuerbare punktförmige Lichtquellen vorgesehen, die selektiv Licht in Richtung der Ware emittieren. Das von der Ware reflektierte Licht wird vom Lichtleiter aufgenommen und zum Detektor geleitet. Der Lichtleiter befindet sich von den punktförmigen Lichtquellen optisch isoliert im Wesentlichen auf demselben Träger wie die Lichtquellen selbst. Die Kantenerkennung erfolgt durch das von der Ware zurück reflektierte Licht. Außerhalb an der Ware vorbeilaufendes Licht wird nicht reflektiert, sondern strahlt in die Umgebung ab und fällt demzufolge nicht auf einen Lichtleiter. Dadurch, daß die Ortslage der jeweiligen bevorzugt punktförmigen Lichtquellen bekannt ist und diese punktförmigen Lichtquellen nacheinander bzw. selektiv oder in kleinen Gruppen angesteuert werden, kann eine Kantenerkennung wie folgt realisiert werden. Wenn bei der Ansteuerung der n-ten punktförmigen Lichtquelle ein Reflexionssignal auf den Lichtwellenleiter gelangt und dort zum Photodetektor geführt wird, dann ist aufgrund der eindeutigen Zuordnung der jeweiligen, gerade angesteuerten Lichtquelle zur Ortslage die Lage der Warenbahnkante ermittelbar. Die jeweils kleinste Einheit der punktförmigen Lichtquellen bzw. deren Abstände untereinander bestimmen die Auflösung für die Warenbreiteninformation.

Eine derartige Anordnung bietet den wesentlichen Vorteil, dass die Kantendetektion nunmehr unabhängig von der Warendicke erfolgen kann und sowohl bei Fertigungsvorrichtungen für dicke und dünne Waren ohne größere Einrichtungsarbeiten in einfacher Weise in eine bestehende Anlage nachinstalliert werden kann.

Erfindungsgemäß ist die Sensoranordnung **dadurch gekennzeichnet, dass** die Lichtleitereinrichtung ein Kunststoffstab mit einer integrierten, längsverlaufenden Reflexionsfläche ist, wobei der Photodetektor an mindestens einer der Stirnseiten des Kunststoffstabs befindlich ist und der Kunststoffstab und die Lichtquellenzeile auf einer Ebene liegen und parallel zueinander verlaufen, wobei zwischen diesen Elementen eine Abschattungsvorrichtung zum Verhindern des Einkoppelns seitlicher Streustrahlung vorgesehen ist.

Zweckmäßigerweise sind die ortsdefinierten punktförmigen Lichtquellen für eine Emission eines gebündelten Lichtkegels mit einem kleinen Öffnungswinkel ausgebildet. Der Lichtkegel ist somit idealerweise als ein paralleles sehr scharf begrenztes Lichtbündel ausgeführt. Dadurch kann die Reflexion an der Warenoberfläche mit einem Mindestmaß an irregulärer Streuung und mit einer optimalen Ortsauflösung erfolgen, wobei eine Reflexion des scharfen Lichtbündels in sich selbst möglich ist und Verzerrungen in der Kantendetektion auf ein Mindestmaß reduziert werden. Zur Verbesserung der Ortsauflösung ist in Strahlrichtung des Lichtkegels der Lichtquelle eine Blende mit parallel verlaufenden Schlitzen angeordnet. Die Blende verhindert durch eine Abkantung hin zum Lichtleiter außerdem unerwünschte seitliche Streustrahlung.

Bei einer ersten Ausführungsform sind die Lichtquellen Laserdioden. Derartige Lichtquellen zeichnen sich durch eine fast parallele Lichtemission mit niedrigen Strahlquerschnitten aus. Laserdioden erfüllen somit die beschriebenen grundlegenden Anforderungen am besten.

Bei einer zweiten Ausführungsform sind die Lichtquellen in Form optisch kollimierter lichtemittierender Dioden, LED, ausgebildet. Die Kollimation sichert hierbei einen möglichst parallelen und scharfen Strahlverlauf.

Weiterhin ist zweckmäßigerweise eine Steuereinheit für ein selektives Ansteuern jeweils nur einer Lichtquelle oder einer Lichtquellengruppe vorgesehen.

Zusammenfassend stellt sich die Erfindung wie folgt dar. Durch die Anordnung einer oder mehrerer paralleler Zeilen von punktförmigen Lichtquellen, z. B. lichtemittierenden Dioden, welche einzeln, bevorzugt nacheinander ansteuerbar sind, und die Möglichkeit des Nachweises von reflektierter Strahlung über einen Reflexionskörper, d.h. die Warenbahn, ist deren Breite bzw. deren Kantenposition bestimmbar.

Wird beispielsweise beim Ansteuern der 15. lichtemittierenden Diode einer Zeile ein Reflexionssignal erkannt, dann ist hieraus schlussfolgerbar, dass eine Kante der Warenbahn erfasst wurde. Nach dem Ansteuern der weiteren folgenden Lichtquellen der Zeile wird nach einer endlichen Anzahl von Quellen dann, wenn das breitenmäßige Ende der Warenbahn erreicht ist, kein Reflexionssignal mehr auftreten. Aus der Bestimmung der dann angesteuerten Lichtquelle kann bei bekanntem Abstand der einzelnen Lichtquellen voneinander und deren Gesamtzahl nach Kalibrierung die Warenbahnbreite berechnet werden. Die Photodetektoren können bevorzugt an den Stirnseiten des stabförmigen Lichtleiters angeordnet werden.

Erfindungsgemäß ist auch ein quasi Scan-Betrieb möglich, wobei die lichtemittierenden Dioden nacheinander über die Breite der Zeile in Warenbahn-Bewegungsrichtung von links nach rechts und umgekehrt angesteuert werden.

Die Sensoranordnung soll nachfolgend anhand mehrerer Figuren näher erläutert werden. Es werden für gleiche bzw. gleichwirkende Teile die selben Bezugszeichen verwendet. Im einzelnen zeigt:
Fig. 1 eine konventionelle Sensoranordnung in Transmissionskonfiguration mit stabförmiger Lichtquelle und Lichtleiterstab nach dem Stand der Technik,
Fig. 2 eine konventionelle Sensoranordnung in Transmissionskonfiguration mit stabförmiger Lichtquelle und Lichtleiteranordnung nach dem Stand der Technik,
Fig. 3 eine konventionelle Sensoranordnung zur Kantendetektion in Reflexionskonfiguration,
Fig. 4 eine Darstellung der Lichtleitereinrichtung als Kunststoffstab sowie der Schlitzblendenanordnung der erfindungsgemäßen Sensoranordnung.

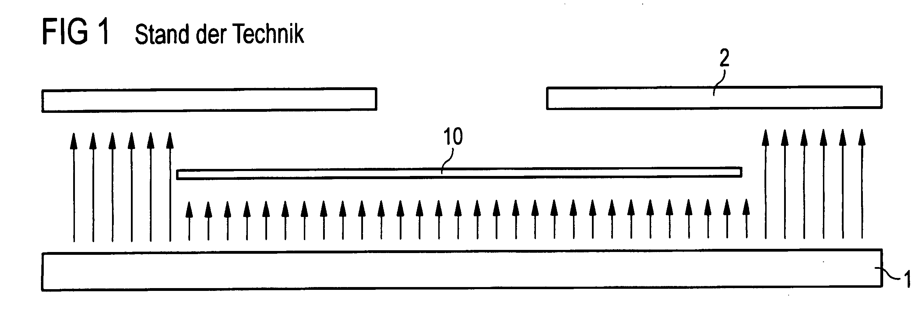

Fig. 1 zeigt einen konventionellen Breitbandsensor in Transmissionskonfiguration nach dem Stand der Technik. Eine stabförmige Lichtquelle 1, beispielsweise eine Leuchtstoffröhre, emittiert Licht mit einer an sich beliebigen Wellenlänge. Das Licht wird von einem Lichtleiterstab 2 empfangen und an einen hier nicht abgebildeten Photosensor geleitet und dort registriert. Eine lichtundurchlässige Ware 10 schirmt hierbei die stabförmige Lichtquelle teilweise ab. Eine hier nicht abgebildete Lichtführungseinrichtung, beispielsweise eine verschiebbare Blende oder eine rotierende Trommel mit einer schraubenförmigen Schlitzblende, blendet aus der Lichtquelle ein Lichtbündel aus verschiebt es in eine horizontalen Richtung. Die Stellung der Lichtführungseinrichtung, bei der erstmalig kein Lichtsignal innerhalb des Lichtleiterstabes mehr registriert wird, markiert die Kantenlage der Ware. Bei zwei bekannten Kantenlagen wird entsprechend die Warenbreite durch eine Differenzmessung beider Kantenlagen innerhalb eines Maßstabs der Sensoranordnung bestimmt. Eine derartige Anordnung erfordert eine exakte Ausrichtung von Lichtquelle und Lichtleiterstab und ist hinsichtlich ihres Raumaufwandes und der mechanischen Abnutzung der Lichtführungseinrichtung nachteilig.

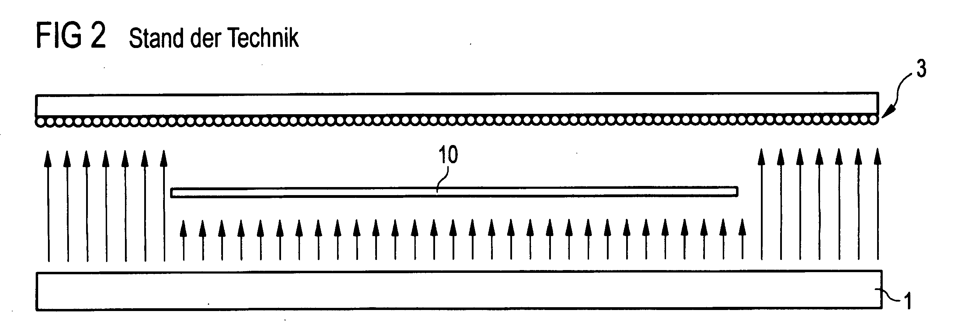

Fig. 2 zeigt eine weitere konventionelle Ausführungsform in einer Transmissionskonfiguration. An Stelle der Lichtempfangsstäbe und der Lichtführungseinrichtung ist bei dieser bekannten Ausführungsform eine Lichtleiteranordnung 3 aus einer Gesamtheit von in ihrer Lage eindeutig definierten Lichtleitern vorgesehen. Bei einer Lichtemission durch die stabförmige Lichtquelle 1 werden einige Abschnitte der Lichtleiteranordnung 3 durch die lichtundurchlässige Ware 10 abgeschattet. Bei dieser Ausführungsform kann die Lichtführungseinrichtung entfallen. Da der Ort jedes aktiven lichtführenden Lichtleiters auf der Lichtleiteranordnung bekannt ist, zeichnet sich die Kantenlage der Ware direkt auf dem Anregungsprofil der Lichtleiteranordnung ab.

Eine derartige Sensoranordnung ist jedoch mit einem zum Teil erheblichen Justageaufwand verbunden und erfordert zudem einen ausreichenden Raumbedarf zur Installation. Sie kann demzufolge nicht ohne zum Teil größere apparative Veränderung in eine bestehende Fertigungsanlage integriert werden.

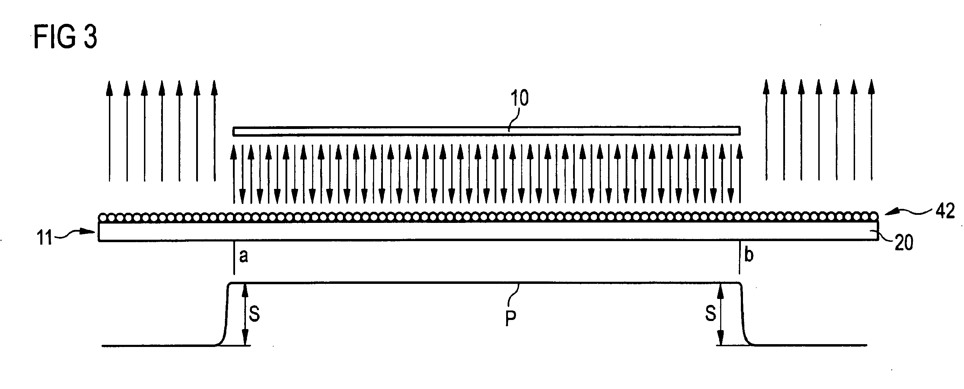

Fig. 3 zeigt eine Prinzipdarstellung einer obenfalls bekannten Sensoranordnung. Die Sensoranordnung besteht aus einer der reflektierenden Oberfläche einer Ware 10 gegenüberliegend angeordneten Sensorfläche 11 zur Lichtemission und zum Lichteinfang. Die Sensoranordnung entspricht somit einer reinen Reflexionskonfiguration.

Die Sensorfläche 11 weist eine Gesamtheit linear angeordneter punktförmiger Lichtquellen 20 auf, die mit einem z. B. parallel verlaufenden Lichtleiter 42 kombiniert sind. Die Sensorfläche ist so gestaltet, dass ein direkter Lichtübertritt zwischen den Lichtquellen und dem Lichtleiter ausgeschlossen ist. Die Lichtquellen sind zudem so ausgeführt, dass das emittierte Lichtbündel möglichst mit einer starken Kollimation, d. h. einem entsprechend kleinen Öffnungswinkel, senkrecht auf die reflektierende Warenoberfläche trifft und idealerweise in sich selbst zurückreflektiert wird. Dabei weitet sich das Lichtbündel bedingt durch Unebenheiten auf der Warenoberfläche geringfügig auf. Dadurch fällt das reflektierte Licht mit einem erweiterten Strahlquerschnitt auf den Lichtleiter zurück und kann detektiert werden. Zur Detektion des von dem Lichtleiter empfangene Lichts dienen optisch gekoppelte Photodetektoren. Der Ort jeder Lichtquelle ist auf der Sensorfläche eindeutig vorgegeben, ein am Photodetektor anliegendes Signal verweist demnach auf eine eindeutige Position auf der Sensorfläche. Durch den senkrechten Lichteinfall auf die Oberfläche der Ware und die dabei ausgeführte Reflexion wird die Warenkontur praktisch verzerrungsfrei auf die Sensorfläche abgebildet. Lichtbündel, die nicht auf die Warenoberfläche treffen, erfahren keine Reflexion und erzeugen deswegen kein Signal an den Photodetektoren, die zu dem Lichtleiter gehören.

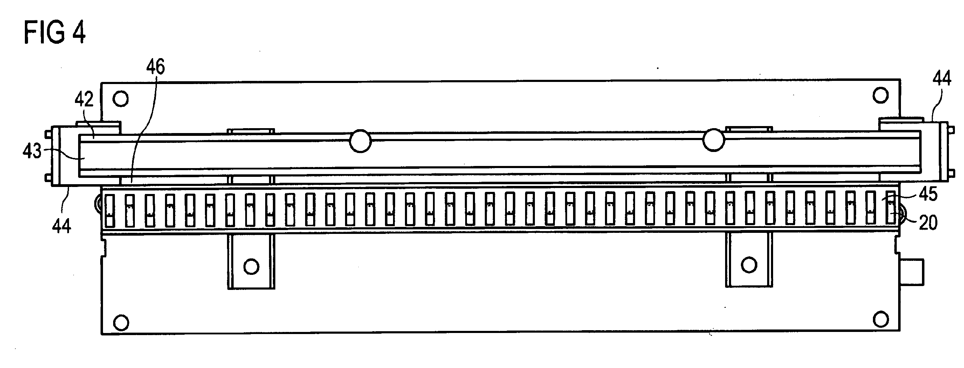

Bei der Darstellung der erfindungsgemäßen Sensoranordnung nach Fig. 4 wird von einer Lichtleitereinrichtung in Form eines Kunststoffstabs 42 mit einer integrierten, längsverlaufenden Reflexionsfläche 43 zur Verbesserung des Signalrauschverhältnisses ausgegangen, wobei der Photodetektor an mindestens einer der Stirnseiten des Kunststoffstabs befindlich ist.

Der Kunststoffstab wird mit stirnseitigen Halterungen 44 fixiert, wobei diese gleichzeitig eine Aufnahme für den mindestens einen Photodetektor besitzen.

Zur Verbesserung der Ortsauflösung in Strahlrichtung der Lichtquellen 20 ist eine Blende 45 aus im Wesentlichen parallel verlaufenden Schlitzen vorgesehen.

Der Lichtleiterstab 42 und die Lichtquellenpfeile liegen im Wesentlichen auf einer Ebene, wobei zwischen diesen Elementen eine Abschattungsvorrichtung 46 zum Verhindern des Einkoppelns seitlicher Streustrahlung vorgesehen ist.

Diese Abschattungsvorrichtung 46 kann Bestandteil der Blende 45 sein. Bei einer Ausführungsform ist die Blende 45 als U-förmiges Profil mit Schlitzblenden im Bereich des Verbindungsschenkels des U-Profils ausgebildet.

Der zur Anwendung kommende Photodetektor besitzt einen Bandpasscharakter, so dass Umgebungslicht wirksam durch entsprechende Filtereigenschaften unterdrückt werden kann.

Nachdem die bevorzugt zur Anwendung kommenden lichtemittierenden Dioden durch einen kurzen elektrischen Impuls angeregt werden, wird softwareseitig sichergestellt, dass für eine bestimmte Zeit im Sinne eines Antwortfensters der oder die Photodetektoren freigeschaltet sind. Nach dieser Zeit wird das Antwortfenster geschlossen. Aus der Breite des Reflexes innerhalb des Antwortfensters kann auf die Warenbeschaffenheit, d.h. die Art der Ware und deren Reflexionseigenschaften geschlussfolgert werden. Verändert die Ware ihre Reflexionseigenschaften, besteht die Möglichkeit, einen entsprechenden Reflexionsschwellwert zu aktualisieren.

Es liegt im Sinne der Erfindung, dass die vorgeschlagene Sensoranordnung nicht nur zur Bestimmung einer Warenbreite oder zur Kantendetektion angewendet werden kann. Ebenso ist es möglich, ein Lochmuster einer Warenbahn zu detektieren, um beispielsweise bei der Herstellung von Airbags aus textilen Materialien deren Kontur und dort funktionsnotwendig vorgesehene Ausnehmungen zu bestimmen, so dass eine Qualitätskontrolle möglich wird.

Im Sinne eines Scanprozesses wird verfahrensseitig zur Breitenmessung einer flächigen Ware einschließlich Kantendetektion mit erläuterter Sensoranordnung entweder ein Ansteuern der Lichtquellen der Zeile jeweils von beiden Seiten von außen beginnend zur Mitte hin oder von links nach rechts und umgekehrt vorgenommen, wobei mit erhaltenem Reflexionssignal die Ansteuerung beendet und bestimmt wird, wo sich die jeweilige Warenkante bzw. die Warenkanten befinden. Mittels eindeutiger geometrischer Zuordnung der jeweiligen angesteuerten Lichtquelle der Zeile, welche für das Reflexionssignal signifikant ist, lässt sich dann die Kantenlage und hieraus wiederum die Warenbreite rechentechnisch ermitteln.

### . Bezugszeichenliste

- 1: stabförmige Lichtquelle
- 2: Lichtleiterstab
- 3: Lichtleiteranordnung
- 10: Ware
- 11: Sensorfläche
- 20: Lichtquellen
- 42: Kunststoffstab
- 43: Reflexionsfläche im Stab 42
- 44: Halterung des Stabs mit Sensoraufnahme
- 45: Schlitzblendenanordnung
- 46: Abschattungsvorrichtung
- P: Signalprofil
- S: Signalsprung
- a, b: Sprungpositionen

## Patentansprüche

1. Sensoranordnung zur optischen Kantendetektierung einer Ware, insbesondere zum Messen einer Warenbreite durch Bestimmen einer von der Ware beeinflussten Lichtausbreitung, mit einer mindestens einseitig bezüglich zur Ware (10) angeordneten Zeile mit örtlich definierten, einzeln ansteuerbaren punktförmigen Lichtquellen (20) sowie einer von der Lichtquellenzeile optisch isolierten Lichtleitereinricjtung (42) zur optischen Einkopplung des jeweils von den Lichtquellen (20) emittierten und von der Ware reflektierten Lichtes und mit mindestens einem Photodetektor welcher mit der Lichtleitereinrichtung (42) in Verbindung steht,
**dadurch gekennzeichnet, dass**
die Lichtleitereinrichtung ein Kunststoffstab (42) mit einer integrierten, längsverlaufenden Reflexionsfläche (43) ist, wobei der Photodetektor an mindestens einer der Stirnseiten des Kunststoffstabs (42) befindlich ist, der Kunststoffstab (42) und die Lichtquellenzeile auf einer Ebene liegen und parallel zueinander verlaufen, wobei zwischen diesen Elementen eine Abschattungsvorrichtung (46) zum Verhindern des Einkoppelns seitlicher Streustrahlung vorgesehen ist.

2. Sensoranordnung nach Anspruch 1,
**dadurch gekennzeichnet, dass**
die ortsdefinierten punktförmigen Lichtquellen (10) für eine Emission eines gebündelten Lichtkegels mit einem kleinen Öffnungswinkel ausgebildet sind.

3. Sensoranordnung nach Anspruch 1 und 2,
**dadurch gekennzeichnet, dass**
die Lichtquellen Laserdioden sind.

4. Sensoranordnung nach Anspruch 1 und 2,
**dadurch gekennzeichnet, dass**
die Lichtquellen optisch kollimierte lichtemittierende Dioden sind.

5. Sensoranordnung nach einem der vorhergehenden Ansprüche,
**gekennzeichnet durch**
eine Steuereinheit für ein selektives Ansteuern jeweils nur einer Lichtquelle oder Lichtquellengruppe und Auslesen des Photodetektors.

6. Sensoranordnung nach Anspruch 1,
**dadurch gekennzeichnet, dass**
stirnseitige Halterungen (44) gleichzeitig den mindestens einen Photodetektor aufnehmen.

7. Sensoranordnung nach Anspruch 1,
**dadurch gekennzeichnet, dass**
zur Verbesserung der Ortsauflösung in Strahlrichtung der Lichtquellen (20) eine Blende (45) aus parallel verlaufenden Schlitzen vorgesehen ist.

8. Sensoranordnung nach Anspruch 7,
**dadurch gekennzeichnet, dass**
die Abschattungsvorrichtung (46) Bestandteil der Blende (45) ist.

9. Verfahren zur Breitenmessung einer flächigen Ware einschließlich Kantendetektion mit einer Sensoranordnung nach einem der Ansprüche 1 bis 8,
**dadurch gekennzeichnet, dass**
entweder die Lichtquellen der Zeile jeweils beidseitig von außen beginnend zur Mitte hin oder von links nach rechts und umgekehrt aktiviert werden, wobei mit erhaltenem Reflexionssignal die Ansteuerung beendet und bestimmt wird, wo sich die Warenkante befindet, und zwar mittels eindeutiger geometrischer Zuordnung der jeweiligen angesteuerten Lichtquelle der Zeile, welche für das Reflexionssignal signifikant ist, weiterhin aus der Breite des in einem vorgegebenen Abtastfenster nach dem Lichtquellenimpuls erhaltenden Reflexionssignals auf die Warenart anhand deren Reflexionseigenschaften geschlussfolgert und gegebenenfalls ein aktualisierter Reflexschwellwert zur weiteren Breitenmessung bzw. Kantendetektion festgelegt wird.

## Claims

1. Sensor assembly for optically detecting the edges of a product, in particular for measuring the width of a product by determining a light propagation that is influenced by the product, comprising a row of locally defined, individually controllable point light sources (20) located on at least one side of the product (10), and an optical waveguide device (42), which is optically isolated from said row of light sources, for optically launching the light emitted by the light sources (20) and reflected by the product, and comprising at least one photodetector which is connected to the optical waveguide device (42),
**characterized in that**
the optical waveguide device is a plastic rod (42) with an integrated, longitudinally extending reflection surface (43), wherein the photodetector is located on at least one of the front sides of the plastic rod (42),
the plastic rod (42) and the light source row are located on one plane and extend parallel with respect to each other, wherein a shading device (46) is provided between these elements so as to prevent the launching of a lateral scattered radiation.

2. Sensor assembly according to claim 1,
**characterized in that**
the locally defined point light sources (10) are embodied to emit a concentrated light cone having a small acceptance angle.

3. Sensor assembly according to claim 1 and 2,
**characterized in that**
the light sources are laser diodes.

4. Sensor assembly according to claim 1 and 2,
**characterized in that**
the light sources are optically collimated light-emitting diodes.

5. Sensor assembly according to one of the preceding claims,
**characterized by**
a control unit for selectively activating only one light source or group of light sources and for reading out the photodetector.

6. Sensor assembly according to claim 1,
**characterized in that**
holders (44) on the front sides simultaneously receive the at least one photodetector.

7. Sensor assembly according to claim 1,
**characterized in that**
a diaphragm (45) comprised of slots extending in parallel is provided to improve the spatial resolution in the beam direction of the light sources (20).

8. Sensor assembly according to claim 7,
**characterized in that**
the shading device (46) forms part of the diaphragm (45).

9. Method for measuring the width of a product with surfaces, including edge detection, by means of a sensor assembly according to one of claims 1 to 8,
**characterized in that**
the light sources of the row are either activated from both sides respectively, beginning at the outer end towards the middle, or from the left to the right and vice versa, wherein the activation is stopped upon receiving the reflection signal and wherein it is determined as to where the product edge is located, namely by means of a unique geometrical assignment of the respectively activated light source of the row being significant for the reflection signal, wherein further conclusions on the type of product are drawn from the width of the reflection signal received after the light source pulse in a predetermined scan window by means of the reflection characteristics thereof and, if necessary, an updated reflection threshold value is defined for the continued width measurement or edge detection, respectively.

## Revendications

1. Agencement de capteurs pour la détection optique des bords d'un objet, en particulier pour mesurer une largeur d'un objet par détermination de l'influence de l'objet sur la propagation de la lumière, comprenant une ligne, agencée au moins d'un côté par rapport à l'objet (10), avec des sources lumineuses ponctuelles (20) localement définies et capables d'être pilotées individuellement, ainsi qu'un système de guide d'ondes (42), optiquement isolé vis-à-vis de la ligne de sources lumineuses, pour le couplage optique de la lumière respectivement émise par les sources lumineuses (20) et réfléchie par l'objet, et comprenant au moins un photodétecteur qui est connecté au système de guide d'ondes (42),
**caractérisé en ce que** le système de guide d'ondes est un barreau en matière plastique (42) avec une surface réfléchissante (43) intégrée s'étendant longitudinalement, dans lequel le photodétecteur se trouve sur l'une au moins des faces frontales du barreau en matière plastique (42), le barreau en matière plastique (42) et la ligne de sources lumineuses sont situés sur un plan et s'étendent parallèlement l'un à l'autre, et il est prévu entre ces éléments un dispositif d'occultation (46) pour empêcher le couplage d'un rayonnement diffus latéral.

2. Agencement de capteurs selon la revendication 1,
**caractérisé en ce que** les sources lumineuses ponctuelles (10) localement définies sont réalisées pour une émission d'un cône lumineux focalisé avec un faible angle d'ouverture.

3. Agencement de capteurs selon la revendication 1 et 2,
**caractérisé en ce que** les sources lumineuses sont des diodes laser.

4. Agencement de capteurs selon la revendication 1 et 2,
**caractérisé en ce que** les sources lumineuses sont des diodes électroluminescentes avec collimation optique.

5. Agencement de capteurs selon l'une des revendications précédentes,
**caractérisé par** une unité de commande pour un pilotage sélectif respectivement d'une seule source lumineuse ou d'un seul groupe de sources lumineuses et pour la lecture du photodétecteur.

6. Agencement de capteurs selon la revendication 1,
**caractérisé en ce que** des montures frontales (44) reçoivent simultanément ledit au moins un photodétecteur.

7. Agencement de capteurs selon la revendication 1,
**caractérisé en ce que,** pour améliorer la résolution locale dans la direction du rayonnement des sources lumineuses (20), il est prévu un diaphragme (45) avec des fentes qui s'étendent parallèlement.

8. Agencement de capteurs selon la revendication 7,
**caractérisé en ce que** le dispositif d'occultation (46) constitue un composant du diaphragme (45).

9. Procédé pour la mesure de largeur d'un objet plat, qui inclut la détection des bords avec un agencement de capteurs selon l'une des revendications 1 à 8,
**caractérisé en ce que** les sources lumineuses de la ligne sont activées soit respectivement des deux côtés en commençant de l'extérieur en allant vers le milieu soit en allant de gauche à droite et inversement, et le pilotage est terminé lorsque le signal réfléchi est reçu, et l'on détermine où se trouve le bord de l'objet, et cela au moyen d'une association géométrique univoque de la source lumineuse respectivement pilotée dans la ligne qui est significative pour le signal réfléchi, et dans lequel, à partir de la largeur du signal de réflexion obtenu dans une fenêtre de détection prédéterminée après impulsion de la source lumineuse, on procède à une conclusion quant au type d'objet au moyen de ses propriétés de réflexion, et l'on détermine le cas échéant une valeur seuil de réflexion actualisée pour la poursuite de la mesure de largeur, ou de la détection des bords.
